# EUROPEAN PATENT APPLICATION

(11) **EP 4 806 818 A1**
(43) Date of publication of application: **16.09.2026**
(21) Application number: 25164099.1
(22) Date of filing: 17.03.2025
(51) Int. Cl.: B65G 69/30

(54) **RAMP DEVICE AND USE OF A RAMP DEVICE**

(30) Priority: 09.03.2025 CN 202510278188
(71) Applicant: Carman Enterprise Co., Ltd, Hangzhou 311121 (CN)
(72) Inventor: Li, Shuoyang, Hangzhou, 311121 (CN)
(74) Representative: Paul & Albrecht Patentanwälte PartG mbB

(57) **Abstract**

The present invention relates to a ramp device (1),
the ramp device (1) comprising
a slope unit (7), which forms a slope extending between a lower rear end (8), which can be positioned on a ground, and an upper front end (9), which can be positioned next to a load carrier, so that a load can be moved on the slope unit (7) from the ground upwards along an oblique longitudinal direction (L), and
a support structure (15), which is held at the slope unit (7) so that the support structure (15) can be positioned on the ground and the longitudinal direction (L) of the slope unit (7) extends obliquely upwards with respect to the ground.

## Description

The present invention relates to a ramp device, in particular for moving a load, preferably a bike, from a ground on a load carrier, preferably on a bike carrier, which is or can be attached to a vehicle. Furthermore, the invention relates to a use of such a ramp device.

Load carriers for fastening to the rear end of a vehicle, in particular a motor vehicle, such as a car, are often used for transporting bikes. Generally, this type of load carrier comprises a coupling device at its front end region which is normally designed so that the load carrier can be fastened to the ball of a conventional trailer coupling.

Other load carriers for transporting bicycles exist, which can be mounted on to the drawbar of a trailer. Both types of bike carriers have in common that they are spaced apart from the ground when they are attached to the corresponding vehicle. Accordingly, a bike to be transported has to be lifted by a user manually order to load the bike on the load carrier.

E-bikes become more and more popular. They have electrical drive means comprising an electrical drive motor and a rechargeable battery pack. The electrical drive motor supports a user and reduces the forces and momentums a user must apply. However, e-bikes are much heavier than conventional bikes. This makes it difficult for an operator or a user to lift the bike on a bike carrier which is spaced apart from the ground.

It is an object of the present invention to provide a device which facilitates loading a bike on a bike carrier and which, in particular, can be used in a very flexible manner.

This object is solved by a ramp device mentioned at the beginning, which comprises a slope unit, which forms, in particular in an operating state, a slope extending between a lower rear end, which can be positioned on a ground, and an upper front end, which can be positioned next to a load carrier, so that a load can be moved on the slope unit from the ground upwards along an oblique longitudinal direction, and a support structure, which is held in particular at a front end region of the slope unit and can be moved between a transport positon and a use position, in which the support structure points away from the slope unit so that the support structure can be positioned on the ground and the longitudinal direction of the slope unit extends obliquely upwards with respect to the ground.

The invention is based on the consideration to provide a ramp device, which has a slope unit. When the device is in operation, one end of the slope unit, namely a lower rear end, can be positioned on the ground and another end, namely an upper front end, can be positioned next to a load carrier. Accordingly, a bike to be loaded on a load carrier can be moved on the slope unit from the ground to the desired altitude at the upper front end. In other words, the ramp device may form a ramp thus creating an oblique surface on which the bike to be loaded can be moved. The term lower rear end and upper front end refer to a situation when the ramp device is in use.

In order to get the upper front end spaced apart from the ground, a support structure is provided which is held at a front end region of the slope unit and which supports the front end region of the slope unit against the ground.

According to a preferred embodiment, the support structure comprises at least one supporting leg, which is held pivotably at the slope unit. Preferably, the support structure comprises exactly two supporting legs.

Adjusting means may be provided, which are designed an arranged such that the effective length of the support structure, when it is in its use position, can be adjusted. This embodiment is based on the consideration to achieve different slopes on the slope unit, when it is in operation. In this way, the altitude of the upper front relative to the ground can be adjusted so that the ramp device can be adapted to different bike carriers. For example, a bike carrier which is attached to the rear end of a vehicle can be used in context with different vehicles, such as normal cars, sports utility vehicles or even pick up-trucks. The altitude or height with respect to the ground of the trailer coupling may differ, so that the bike carrier is finally used on different altitudes with respect to the ground. In addition, a bike carrier, which is attached to the drawbar of a trailer, may have another altitude than a bike carrier, which is attached to a conventional trailer coupling. Accordingly, by means of such adjusting means, the ramp device can be easily adapted to different altitudes thus allowing to load a bike in an easy manner.

Each supporting leg may comprise an outer leg element and an inner leg element, wherein the inner leg element may extend at least partially inside the outer leg element, so that the inner leg element and the outer leg element can be moved telescopically relative to each other. In other words, the supporting leg may be designed such that its effective length can be adjusted by means of such a telescopically displacement of two leg elements relative to each other. The outer leg element and/or the inner leg element may have a tubular structure.

In order to fix the inner leg element relative to the respective outer leg element of the respective supporting leg, the adjusting means may comprise, assigned to each supporting leg, fixing means. The fixing means may comprise, in particular assigned to each supporting leg, a clamping device, which is arranged and designed such that the inner leg element can be clamped relative to the outer leg element. Preferably, such a clamping creates a force-fit connection between the inner leg element and the outer leg element.

More in detail, each clamping device may comprise a clamping element, which is held at the outer leg element, wherein the clamping element has a clamping section, which protrudes from an end of the outer leg element and surrounds the inner leg element. Each clamping device may comprise a clamping nut, which is or can be screwed on the clamping element and which has an inner clamping surface. The inner clamping surface of the clamping nut can be designed and arranged to interact with a conical outer shape of the clamping element in the clamping section in such a way that the clamping section is deformed in particular elastically inwardly, thus clamping the inner leg element at the outer leg element, when the clamping nut is screwed on the clamping element. In other words, the clamping element may comprise an outer thread and the clamping nut may comprise a corresponding inner thread. When the clamping nut is screwed on the clamping element, the clamping nut interacts with the clamping section, which has a conical outer shape, such that the clamping nut pushes the clamping section of the clamping element inwardly so that a force-fit connection between the clamping element and the inner leg element is achieved. Preferably, the clamping element is fixedly connected to the outer leg element. In particular, the clamping element may have a receiving opening, into which the end of the outer leg element extends. Preferably, the inner leg elements are held at a base part, which is attached to the slope unit, in particular screwed thereto.

According to a preferred embodiment, the support structure may comprise exactly two supporting legs. The supporting legs may be held at the slope unit in such a way that they extend at least substantially parallel to each other and/or in the longitudinal direction, when they are in their transport position. They may diverge from each other towards their free end, when they are in their use position. Preferably, the supporting legs diverge from each other in their use position with an opening angle of at least 10° and/or at most 40°. In concrete terms, the supporting legs are pivotably held at a base part, which is attached to the slope unit. For this purpose, the base part may comprise, at laterally opposite sides, two pivot pins, which engage into corresponding holes formed in the supporting legs, in particular in an end part of the supporting legs, which, preferably, is fixed to the inner leg element. The pivot pins may point in a direction which extends laterally and rearwardly, i.e. obliquely with respect to a direction perpendicular to the longitudinal direction.

Stop means may be provided, which limit the movement of the support structure out of its transport position. The stop means may define the use position. In this way, it is avoided that the supporting legs are moved too far out of their transport position. Preferably, the support structure, in particular the supporting legs, extend at least substantially perpendicularly to the longitudinal direction when the support structure is in its use position. A synchronization mechanism may be provided, which is arranged and designed such that the supporting legs are moved synchronically between their use position and their transport position. By means of such a mechanism, it can be avoided that only one supporting leg is moved towards its transport position. This facilitates the operation by a user.

The slope unit may comprise a guiding deepening open upwardly and extending in the longitudinal direction from the lower rear end to the upper front end of the slope unit. By means of such a guiding deepening, the wheels of a bike to be moved on a load carrier can be guided so that a slipping of a bike out of the slope unit, in particular laterally can be avoided. The guiding deepening may have an horizontal ground surface and, on both lateral sides, upwardly extending oblique side walls.

The slope unit may comprise an upper front slope member and a lower rear slope member movably held at the upper front slope member. The rear slope member can be moved relative to the upper front slope member between an extended operating state and a retracted transport state. This embodiment is based on the consideration to allow a space-saving transport or storage of the ramp device when it is not in use. Accordingly, the upper front slope member and the lower rear slope member can be brought in their extended operating state when the ramp device should be used.

In concrete terms, the lower rear slope member may be held pivotably at the upper front slope member by means of a hinge joint defining a pivot axis. The pivot axis may extend perpendicularly to the longitudinal direction.

According to one embodiment, the hinge joint may be mounted at the rear end of the upper front slope member. In this case, the arrangement may be such that a front end section of the lower rear slope member lies on a rear end section of the upper front slope member, when the lower rear slope member is in its extended operating state.

According to an alternative embodiment, the hinge joint may be mounted at the front end of the lower rear slope member. In this case, the arrangement may be such that a rear end section of the upper front slope member lies on a front end section of the lower rear slope member, when the lower rear slope member is in the extended operating state.

Accordingly, it may be provided that the hinge joint is mounted spaced apart from the end of one of the slope members. In this way, it its achieved that, when in the extended operating state, one slope member lies with an end section on the other slope member. In other words, there may be a section of the slope unit, where the slope members overlap. Such a contact between the slope members extending in the longitudinal direction leads to a mechanically stable design when the ramp device is in use.

In concrete terms, the upper front slope member and/or the lower rear slope member may comprise or may be formed as a profile rail. This allows a simple and cost effective manufacturing.

The slope unit may comprise a rear bearing element, which is preferably arranged on a bottom side at the rear end of the slope unit in order to support the rear end of the slope unit against the ground, when the ramp device is in use.

The object of the invention is also solved by the use of a ramp device as described above for moving a load, in particular a bike, from a ground to a load carrier, in particular a bike carrier, which is or can be attached to a vehicle.

It should be noted that the slope unit serves to support a load, in particular a bike, to be moved on a load carrier, wherein the support structure serves to support the front end of the slope unit against the ground, thus ensuring that the slope unit extends obliquely upwards with respect to the ground.

With regard to the embodiment of the invention, reference is also made to the sub-claims and to the following description of an exemplary embodiment with reference to the attached drawings. The drawings show as follows:
- Figure 1: a ramp device according to the invention, wherein the support structure is in its use position and the slope members are in their extended operating state, in a side view;
- Figure 2: the ramp device of figure 1, wherein the support structure is in its transport position, in a side view;
- Figure 3: the ramp device of figure 1, wherein the support structure is in its transport position and the slope members are in their retracted transport state, in a side view;
- Figure 4: the ramp device of figure 1 in a side view, when it is positioned on the ground;
- Figure 5: the arrangement shown in figure 4, wherein the effective length of the support structure is increased;
- Figure 6: the front end section of the ramp device, wherein the support structure is in its use position;
- Figure 7: the front end section of the ramp device, wherein the support structure is in its transport position;

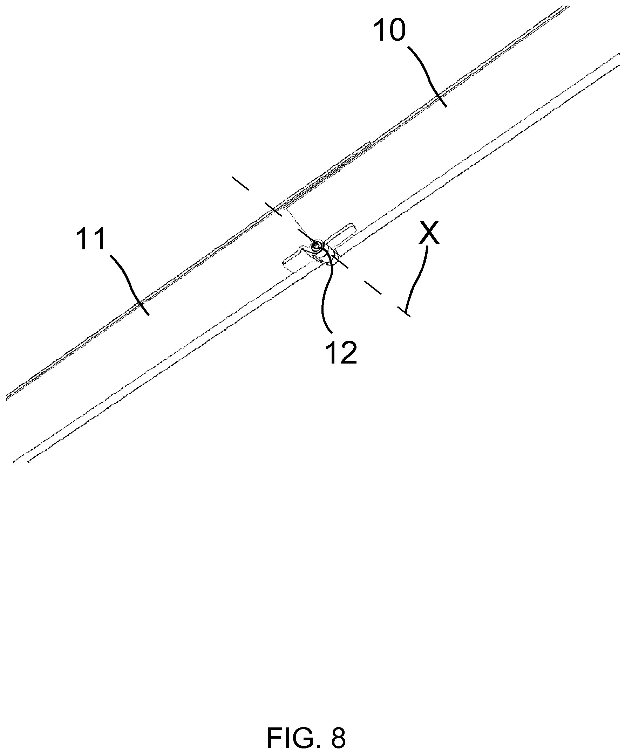

- Figure 8: the middle section of the slope unit in a perspective view;
- Figure 9: the middle section of the supporting legs with the fixing means;
- Figure 10: the arrangement of figure 10, wherein the fixing means are in another state;
- Figure 11: the middle section of the supporting legs in a cross-sectional view;
- Figure 12: a vehicle with a bike carrier and a ramp device according to the invention, wherein a bike is loaded on the bike carrier; and
- Figure 13: a trailer, wherein a bike carrier is mounted on the drawbar of the trailer, and the ramp device according to the invention, wherein a bike is loaded on the bike carrier.

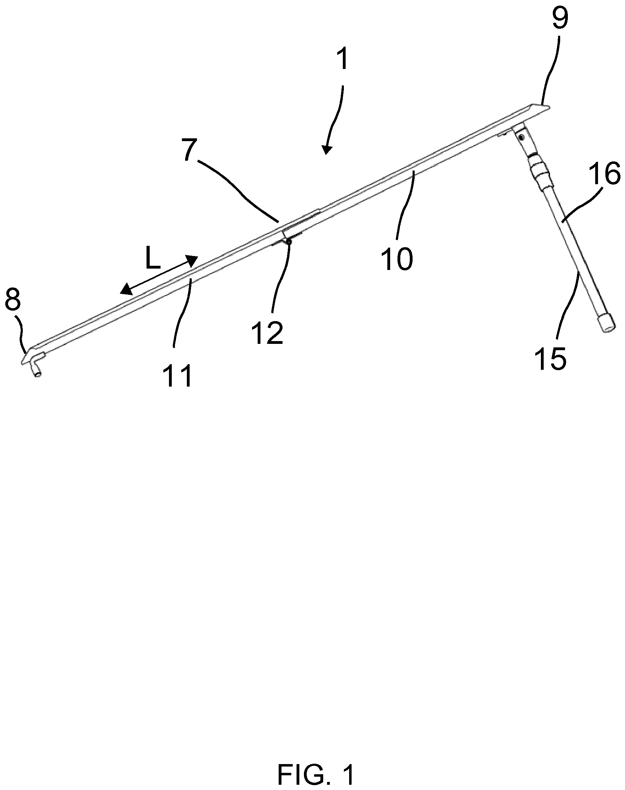

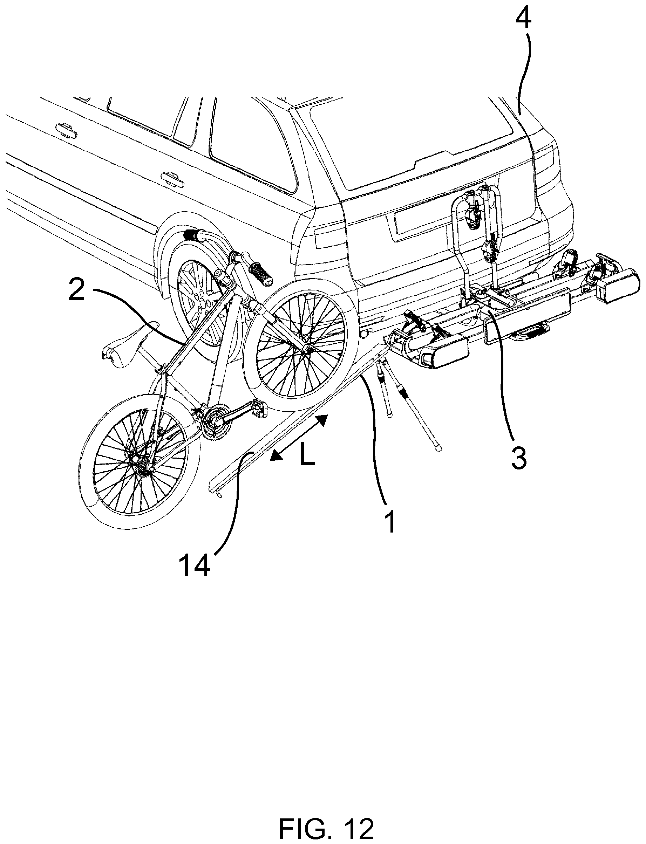

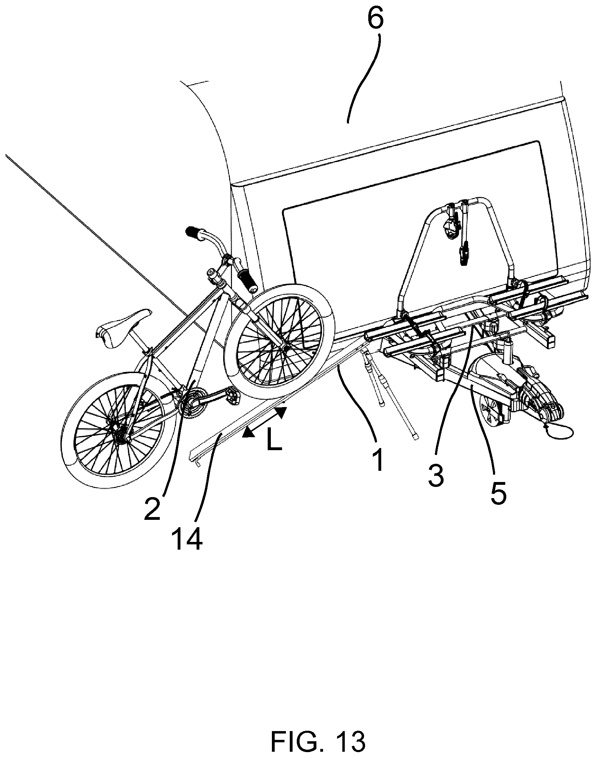

Figure 1 shows a ramp device 1 according to the invention. The ramp device 1 serves to move a bike 2 from a ground on a bike carrier 3, which can be attached to the rear of a vehicle 4, as it is shown for example in figure 12, or which can be attached on the drawbar 5 of a trailer 6, which is shown in figure 13.

The ramp device 1 comprises a slope unit 7, which forms, in use, a slope extending between a lower rear end 8 and upper front end 9. The lower rear end 8 can be positioned on the ground and the upper front end 9 can be positioned next the bike carrier 3, so that a bike can be moved on the slope unit 7 from the ground upwards along an oblique longitudinal direction L.

The slope unit 7 comprises an upper front slope member 10 and lower rear slope member 11. The lower rear slope member 11 is held pivotably at the upper front slope member 10, in concrete terms by means of a hinge joint 12 defining a pivot axis X, which extends perpendicularly to the longitudinal axis L.

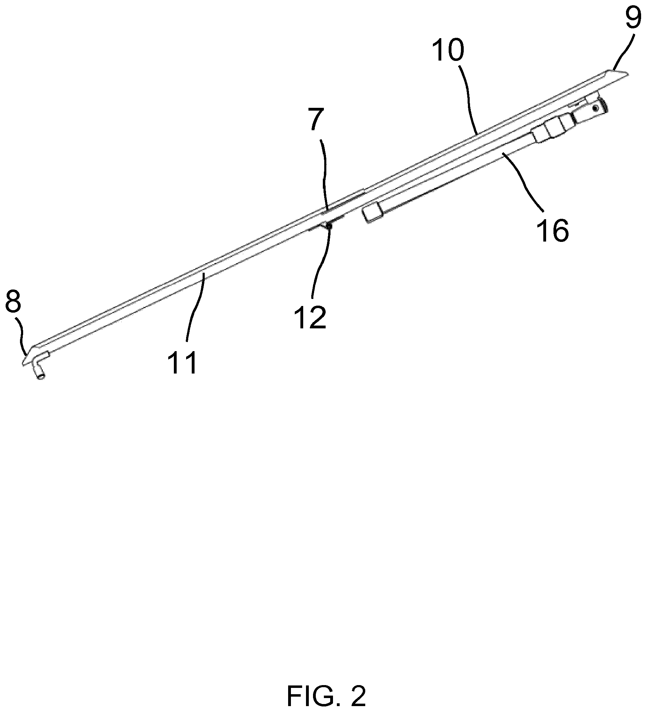

The lower rear slope member 11 can be moved relative to the upper front slope member 10 between an extended operating state and a retracted transport state. The extended operating state is shown for example in figures 1 and 2, which means that the upper front slope member 10 and the lower rear slope member 11, which are formed as a profile rail, form a continuous slope extending between the lower rear end 8 and the upper front end 9.

The hinge joint 12 is mounted at the rear end of the upper front member 10 and the arrangement is such that the front end section of the lower rear slope member 11 lies on the rear end section of the upper front slope member 10, when the lower rear slope member 11 is in the extended operating state, as it is visible for example in figures 1 and 2.

At the rear end of the lower rear slope member 11, a rear bearing element 13 is provided to support the slope unit 7 against the ground. The upper front slope member 10 and the lower rear slope member 11 have a guiding deepening 14 open upwardly extending in the longitudinal direction.

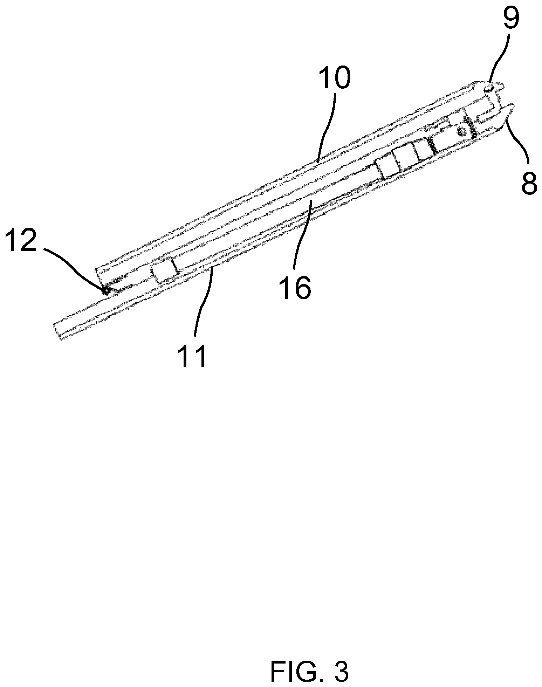

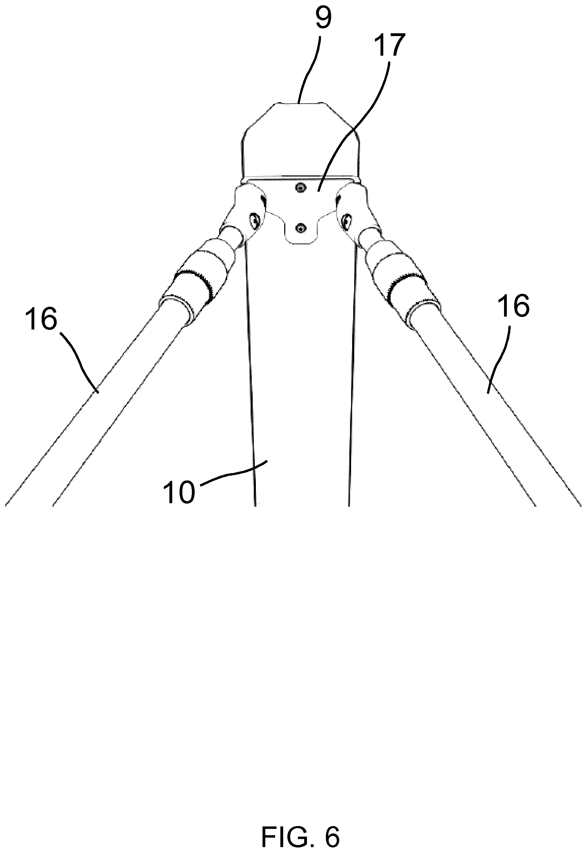

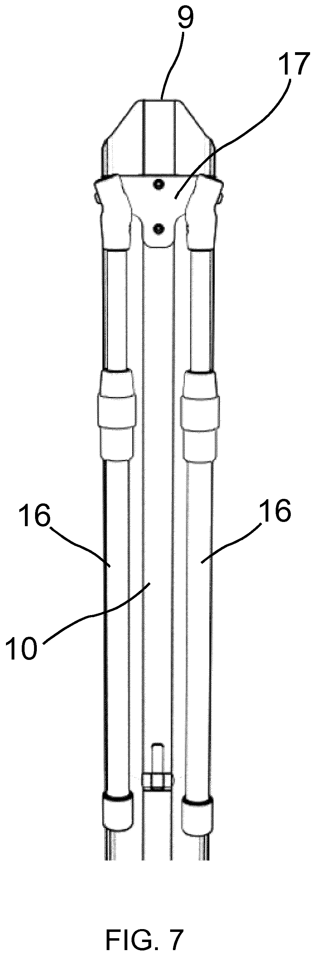

The ramp device 1 further comprises a support structure 15, which is held at a front end region of the slope unit 7, in concrete terms of the upper front slope member 10. The support structure 15 comprises two supporting legs 16 which are held pivotably at a base part 17 fixed to the upper front slope member 10. The supporting legs 16 can be moved between a transport position shown in figures 2 and 3 and a use position shown in figure 1. In the transport position, the supporting legs 16 extend at least substantially parallel to each other and in the longitudinal direction L, whereas, in the use position, they diverge from each other towards their free end and they extend at least substantially perpendicularly to the longitudinal direction L. This can be seen in particular in figures 6 and 7. In concrete terms, they diverge from each other in their use position with an opening angle of about 30°.

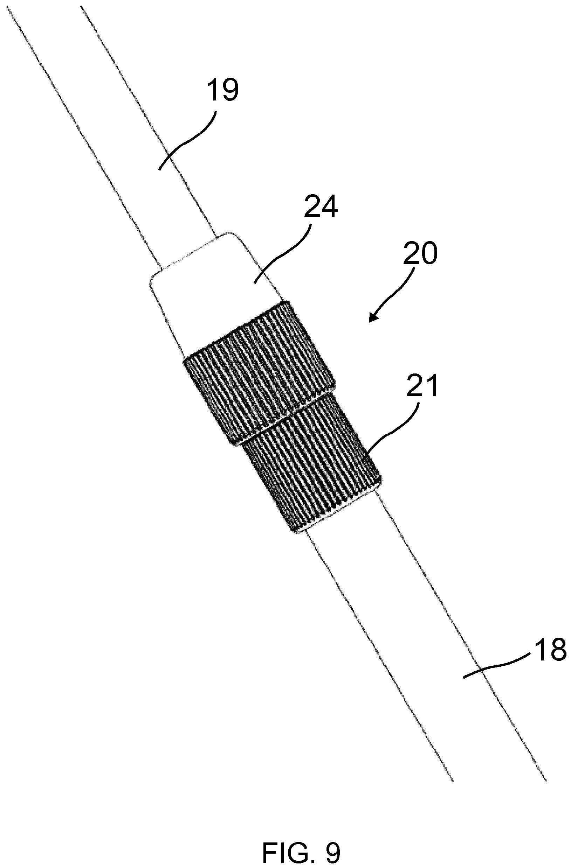

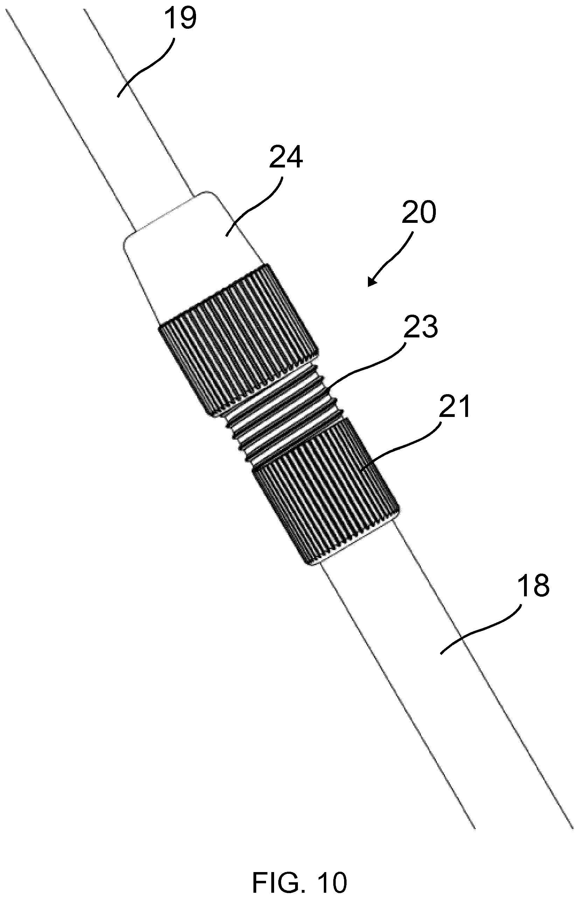

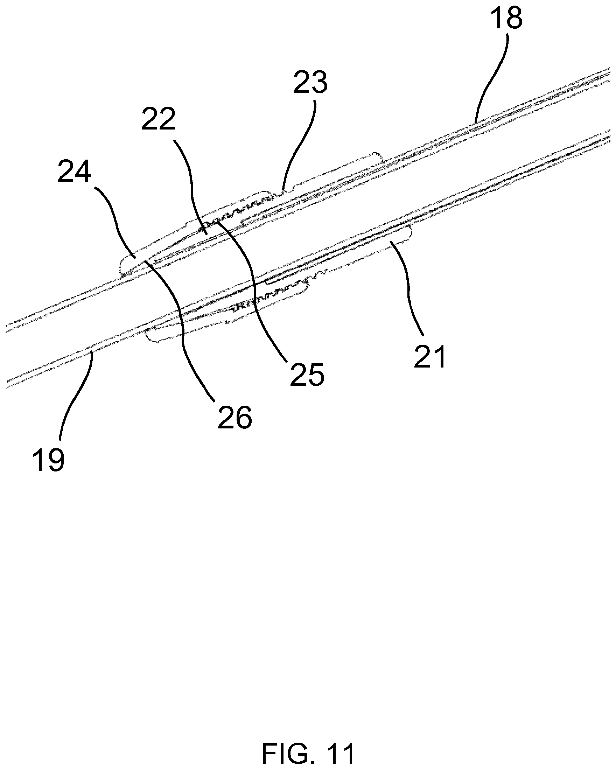

Adjustment means are provided which are designed and arranged such that the effective length of the support structure, when it is in its use position, can be adjusted. The mechanism is shown in detail in figures 9 to 11. For this purpose, each supporting leg 16 comprises an outer leg element 18 and an inner leg element 19. The leg elements 18, 19 preferably have a basically tubular structure. The inner leg element 19 extends at least partially inside the outer leg element 18, so that the inner leg element 19 and the outer leg element 18 can be moved telescopically relative to each other. In order to fix the inner leg element 19 relative to the respective outer leg element 18, the adjusting means comprise, assigned to each supporting leg 16, fixing means. The fixing means comprise a clamping device 20, which is arranged and designed such that the inner leg element 19 can be clamped relative to the outer leg element 18. In concrete terms, each clamping device 20 comprises a clamping element 21, which is fixed at the outer leg element 18. It comprises a clamping section 22, which protrudes upwardly from the end of the outer leg element 18 and has a conical outer shape. The clamping element 21 further comprises an outer thread 23.

The clamping device 20 further comprises a clamping nut 24, which is screwed on the clamping element 21. For this purpose, the clamping nut 24 comprises an inner thread 25 corresponding to the outer thread 23 of the clamping element 21. Furthermore, the clamping nut 24 has a conical inner clamping surface 26, which is designed and arranged to interact with the conical outer shape of the clamping section 22 in such a way that the clamping section 22 is deformed elastically inwardly, thus clamping the inner leg element 19 at the outer leg element 18, when the clamping nut 24 is screwed on the clamping element 21.

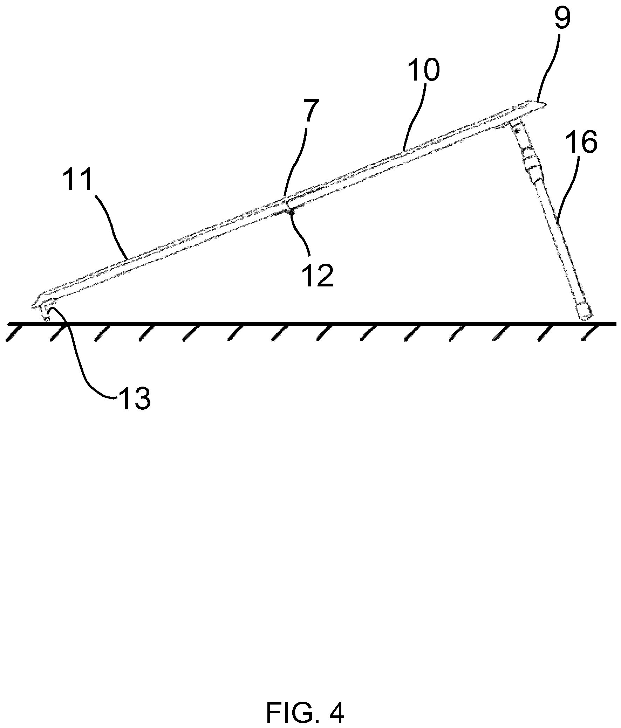

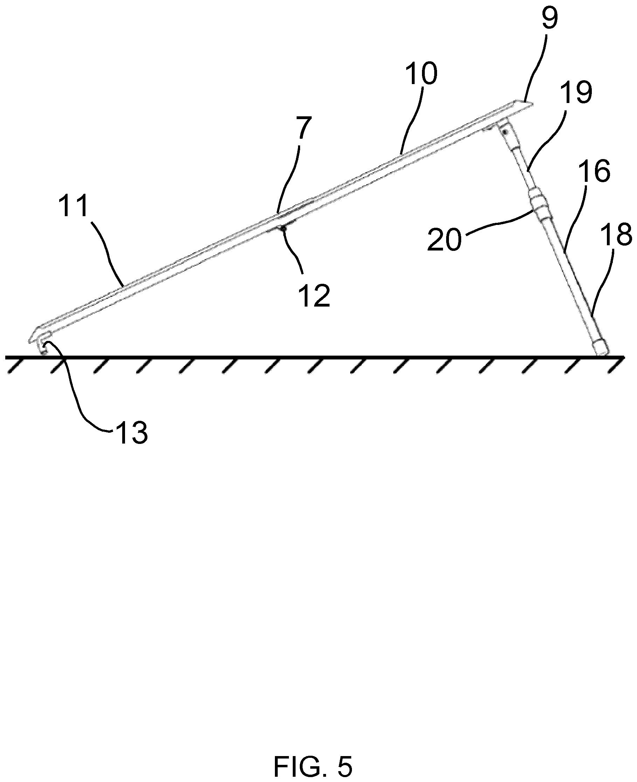

In this way, it is possible to adapt the ramp device 1 to different heights so that the altitude of the upper front end 9 of the slope unit 7 relative to the ground can be adapted, as it is visible in particular when comparing the situation in figure 4 and in figure 5. In this way, the ramp device 1 according to the invention can be used to move a bike 2 from the ground on a bike carrier 3, as it is visible for example in figures 12 and 13. For this purpose, the ramp device 1 is positioned on the ground so that the upper front end 9 of the slope unit 7 is positioned directly at adjacent to the bike carrier 2. Due to the adjusting means, which allow to adjust the effective length of the support structure 15, the altitude of the upper front end 9 and thus of the slope of the slope unit 7 can be adapted to the corresponding situation of the bike carrier 3.

### Reference Character List

- 1: ramp device
- 2: bike
- 3: bike carrier
- 4: vehicle
- 5: drawbar
- 6: trailer
- 7: slope unit
- 8: lower rear end
- 9: upper front end
- 10: upper front slope member
- 11: lower rear slope member
- 12: hinge joint
- 13: bearing element
- 14: guiding deepening
- 15: support structure
- 16: supporting leg
- 17: base part
- 18: outer leg element
- 19: inner leg element
- 20: clamping device
- 21: clamping element
- 22: clamping section
- 23: outer thread
- 24: clamping nut
- 25: inner thread
- 26: inner clamping surface
- L: longitudinal direction
- X: pivot axis

## Claims

1. Ramp device (1), in particular for moving a load, preferably a bike (2), from a ground on a load carrier, preferably on a bike carrier (3), which is or can be attached to a vehicle (4),
the ramp device (1) comprising
a slope unit (7), which forms, in particular in an operating state, a slope extending between a lower rear end (8), which can be positioned on a ground, and an upper front end (9), which can be positioned next to a load carrier, so that a load can be moved on the slope unit (7) from the ground upwards along an oblique longitudinal direction (L), and
a support structure (15), which is held in particular at a front end region of the slope unit (7) and can be moved between a transport position and a use position, in which the support structure (15) points away from the slope unit (7) so that the support structure (15) can be positioned on the ground and the longitudinal direction (L) of the slope unit (7) extends obliquely upwards with respect to the ground.

2. Ramp device (1) according to claim 1, **characterized in that** the support structure (15) comprises at least one supporting leg (16), which is held pivotably at the slope unit (7).

3. Ramp device (1) according to claim 1 or 2, **characterized in that** adjusting means are provided, which are designed and arranged such that the effective length of the support structure (15), when it is in its use position, can be adjusted.

4. Ramp device (1) according to claim 2 and 3, **characterized in that** each supporting leg (16) comprises an outer leg element (18) and an inner leg element (19), wherein the inner leg element (19) extends at least partially inside the outer leg element (18), so that the inner leg element (19) and the outer leg element (18) can be moved telescopically relative to each other.

5. Ramp device (1) according to claim 4, **characterized in that** the adjusting means comprise assigned to each supporting leg (16) fixing means in order to fix the inner leg element (19) relative to the respective outer leg element (18) of each supporting leg (16).

6. Ramp device (1) according to claim 5, **characterized in that** the fixing means comprise, in particular assigned to each supporting leg (16), a clamping device (20), which is arranged and designed such that the inner leg element (19) can be clamped relative to the outer leg element (18).

7. Ramp device (1) according to claim 6, **characterized in that** each clamping device (21) comprises
a clamping element, which is held at the outer leg element (18), wherein the clamping element has a clamping section (22), which protrudes from an end of the outer leg element (18) and surrounds the inner leg element (19), and
a clamping nut (24), which is or can be screwed on the clamping element and which has an inner clamping surface (26),
wherein the inner clamping surface (26) of the clamping nut (24) is designed and arranged to interact with the conical outer shape of the clamping element (21) in such a way that the clamping section (22) is deformed in particular elastically inwardly, thus clamping the inner leg element (19) at the outer leg element (18), when the clamping nut (24) is screwed on the clamping element.

8. Ramp device (1) according to claim 2 or any of claims 4 to 7, **characterized in that** the support structure (15) comprises exactly two supporting legs (16), wherein, in particular, the supporting legs (16) are held at the slope unit (7) in such a way that they extend at least substantially parallel to each other and/or in the longitudinal direction (L), when they are in their transport position, and in such a way that they diverge from each other towards their free ends, when they are in their use position, wherein, preferably, the supporting legs (16) diverge from each other in their use position with an opening angle of at least 10° and/or at most 40°.

9. Ramp device (1) according to any of the preceding claims, **characterized in that** stop means are provided which limit the movement of the support structure (15) out of its transport position, wherein the stop means define the use position, and/or **in that** the support structure (15), in particular the supporting legs (16), extend at least substantially perpendicularly to the longitudinal direction (L) when the support structure (15) is in its use position.

10. Ramp device (1) according to any of the preceding claims, **characterized in that** the slope unit (7) comprises a guiding deepening (14) open upwardly and extending in the longitudinal direction (L) from the lower rear end (8) to the upper front end (9) of the slope unit (7).

11. Ramp device (1) according to any of the preceding claims, **characterized in that** the slope unit (7) comprises an upper front slope member (10) and a lower rear slope member (11) moveably held at the upper front slope member (10), wherein the lower rear slope member (11) can be moved relative to the upper front slope member (10) between an extended operating state and a retracted transport state.

12. Ramp device (1) according to claim 11, **characterized in that** the lower rear slope member (11) is held pivotably at the upper front slope member (10) by means of a hinge joint (12) defining a pivot axis (X).

13. Ramp device (1) according to claim 12, **characterized in that** the pivot axis (X) extends perpendicularly to the longitudinal direction (L), and/or **in that** the hinge joint (12) is mounted at the rear end of the upper front slope member (10), or **in that** the hinge joint (12) is mounted at the front end of the lower rear slope member (11), and/or
**in that** the arrangement is such that a rear end section of the upper front slope member (10) lies on the front end section of the lower rear slope member (11), when the lower rear slope member (11) is in its extended operating state, or **in that** the arrangement is such that a front end section of the lower rear slope member (11) lies on the rear end section of the upper front slope member (10), when the lower rear slope member (11) is in the extended operating state.

14. Ramp device (1) according to any of claims 11 to 13, **characterized in that** the upper front slope member (10) and/or the lower rear slope member (11) comprise or may be formed as a profile rail.

15. Use of a ramp device (1) according to any of the preceding claims for moving a load, in particular a bike (2), from a ground on a load carrier, in particular a bike carrier (3), which is or can be attached to a vehicle (4).

## Amended claims

### Amended claims in accordance with Rule 137(2) EPC.

1. Ramp device (1), in particular for moving a load, preferably a bike (2), from a ground on a load carrier, preferably on a bike carrier (3), which is or can be attached to a vehicle (4),
the ramp device (1) comprising
a slope unit (7), which forms, in particular in an operating state, a slope extending between a lower rear end (8), which can be positioned on a ground, and an upper front end (9), which can be positioned next to a load carrier, so that a load can be moved on the slope unit (7) from the ground upwards along an oblique longitudinal direction (L), and
a support structure (15), which is held in particular at a front end region of the slope unit (7) and can be moved between a transport position and a use position, in which the support structure (15) points away from the slope unit (7) so that the support structure (15) can be positioned on the ground and the longitudinal direction (L) of the slope unit (7) extends obliquely upwards with respect to the ground,
wherein the support structure (15) comprises exactly two supporting legs (16), which are held pivotably at the slope unit (7), **characterized in that** the supporting legs (16) are held at the slope unit (7) in such a way that they extend at least substantially parallel to each other and/or in the longitudinal direction (L), when they are in their transport position, and in such a way that they diverge from each other towards their free ends, when they are in their use position.

2. Ramp device (1) according to claim 1, **characterized in that** the supporting legs (16) diverge from each other in their use position with an opening angle of at least 10° and/or at most 40°.

3. Ramp device (1) according to claim 1 or 2, **characterized in that** adjusting means are provided, which are designed and arranged such that the effective length of the support structure (15), when it is in its use position, can be adjusted.

4. Ramp device (1) according to claim 2 and 3, **characterized in that** each supporting leg (16) comprises an outer leg element (18) and an inner leg element (19), wherein the inner leg element (19) extends at least partially inside the outer leg element (18), so that the inner leg element (19) and the outer leg element (18) can be moved telescopically relative to each other.

5. Ramp device (1) according to claim 4, **characterized in that** the adjusting means comprise assigned to each supporting leg (16) fixing means in order to fix the inner leg element (19) relative to the respective outer leg element (18) of each supporting leg (16).

6. Ramp device (1) according to claim 5, **characterized in that** the fixing means comprise, in particular assigned to each supporting leg (16), a clamping device (20), which is arranged and designed such that the inner leg element (19) can be clamped relative to the outer leg element (18).

7. Ramp device (1) according to claim 6, **characterized in that** each clamping device (21) comprises
a clamping element, which is held at the outer leg element (18), wherein the clamping element has a clamping section (22), which protrudes from an end of the outer leg element (18) and surrounds the inner leg element (19), and
a clamping nut (24), which is or can be screwed on the clamping element and which has an inner clamping surface (26),
wherein the inner clamping surface (26) of the clamping nut (24) is designed and arranged to interact with the conical outer shape of the clamping element (21) in such a way that the clamping section (22) is deformed in particular elastically inwardly, thus clamping the inner leg element (19) at the outer leg element (18), when the clamping nut (24) is screwed on the clamping element.

8. Ramp device (1) according to any of the preceding claims, **characterized in that** stop means are provided which limit the movement of the support structure (15) out of its transport position, wherein the stop means define the use position, and/or **in that** the support structure (15), in particular the supporting legs (16), extend at least substantially perpendicularly to the longitudinal direction (L) when the support structure (15) is in its use position.

9. Ramp device (1) according to any of the preceding claims, **characterized in that** the slope unit (7) comprises a guiding deepening (14) open upwardly and extending in the longitudinal direction (L) from the lower rear end (8) to the upper front end (9) of the slope unit (7).

10. Ramp device (1) according to any of the preceding claims, **characterized in that** the slope unit (7) comprises an upper front slope member (10) and a lower rear slope member (11) moveably held at the upper front slope member (10), wherein the lower rear slope member (11) can be moved relative to the upper front slope member (10) between an extended operating state and a retracted transport state.

11. Ramp device (1) according to claim 10, **characterized in that** the lower rear slope member (11) is held pivotably at the upper front slope member (10) by means of a hinge joint (12) defining a pivot axis (X).

12. Ramp device (1) according to claim 11, **characterized in that** the pivot axis (X) extends perpendicularly to the longitudinal direction (L), and/or **in that** the hinge joint (12) is mounted at the rear end of the upper front slope member (10), or **in that** the hinge joint (12) is mounted at the front end of the lower rear slope member (11), and/or
**in that** the arrangement is such that a rear end section of the upper front slope member (10) lies on the front end section of the lower rear slope member (11), when the lower rear slope member (11) is in its extended operating state, or **in that** the arrangement is such that a front end section of the lower rear slope member (11) lies on the rear end section of the upper front slope member (10), when the lower rear slope member (11) is in the extended operating state.

13. Ramp device (1) according to any of claims 10 to 12, **characterized in that** the upper front slope member (10) and/or the lower rear slope member (11) comprise or may be formed as a profile rail.

14. Use of a ramp device (1) according to any of the preceding claims for moving a load, in particular a bike (2), from a ground on a load carrier, in particular a bike carrier (3), which is or can be attached to a vehicle (4).
